# EUROPÄISCHE PATENTSCHRIFT

(11) **EP 2 828 056 B1**
(45) Veröffentlichungstag und Bekanntmachung des Hinweises auf die Patenterteilung: **05.09.2018**
(21) Anmeldenummer: 13713134.8
(22) Anmeldetag: 25.03.2013
(51) Int. Cl.: B29C 45/76, G05B 19/409

(54) **VORRICHTUNG UND VERFAHREN ZUM BEDIENEN EINER MIT EINEM HANDHABUNGSGERÄT AUSGESTATTETEN SPRITZGIEßMASCHINE**
DEVICE AND METHOD FOR OPERATING AN INJECTION MOULDING MACHINE EQUIPPED WITH A HANDLING DEVICE
DISPOSITIF ET PROCÉDÉ DESTINÉS À COMMANDER UNE MACHINE DE MOULAGE PAR INJECTION ÉQUIPÉE D'UN APPAREIL DE MANIPULATION

(30) Priorität: 23.03.2012 DE 102012005975
(43) Veröffentlichungstag der Anmeldung: 28.01.2015
(73) Patentinhaber: KraussMaffei Technologies GmbH, 80997 München (DE)
(72) Erfinder: GRIMM, Günther, 86567 Hilgertshausen (DE)
(74) Vertreter: Roider, Stephan
(86) Internationale Anmeldenummer: PCT/EP2013/056212
(87) Internationale Veröffentlichungsnummer: WO 2013/139990

(56) Entgegenhaltungen:
- CH-A1- 703 723
- DE-A1-102004 051 106
- US-A1- 2008 065 243
- US-A1- 2010 138 031
- US-A1- 2011 106 284
- Anonymous: "Connect your smartphone to your desktop via software or web service - TechRepublic", , 17 December 2010 (2010-12-17), XP055416584, Retrieved from the Internet: URL:http://www.techrepublic.com/blog/smart phones/connect-your-smartphone-to-your-des ktop-via-software-or-web-service/ [retrieved on 2017-10-17]

## Beschreibung

Die Erfindung betrifft eine Vorrichtung und ein Verfahren zum Bedienen einer mit einem Handhabungsgerät ausgestatteten Spritzgießmaschine.

Es sind Spritzgießmaschinen mit einem Linearroboter als Handhabungsgerät bekannt, bei denen einerseits ein stationäres Bediengerät für die Spritzgießmaschine und ein mobiles Bediengerät für den Linearroboter vorgesehen sind. Das Einrichten und Betreiben der Spritzgießmaschine und das Einrichten und Betreiben des Linearroboters laufen über eine Steuerung. Auf dem Bildschirm des stationären Bediengeräts der Spritzgießmaschine und auf dem Bildschirm des mobilen Bediengeräts des Linearroboters erfolgt das Einrichten und das Betreiben des Linearroboters mit identischer Darstellung der Bildschirmseiten und mit identischer Funktionalität.

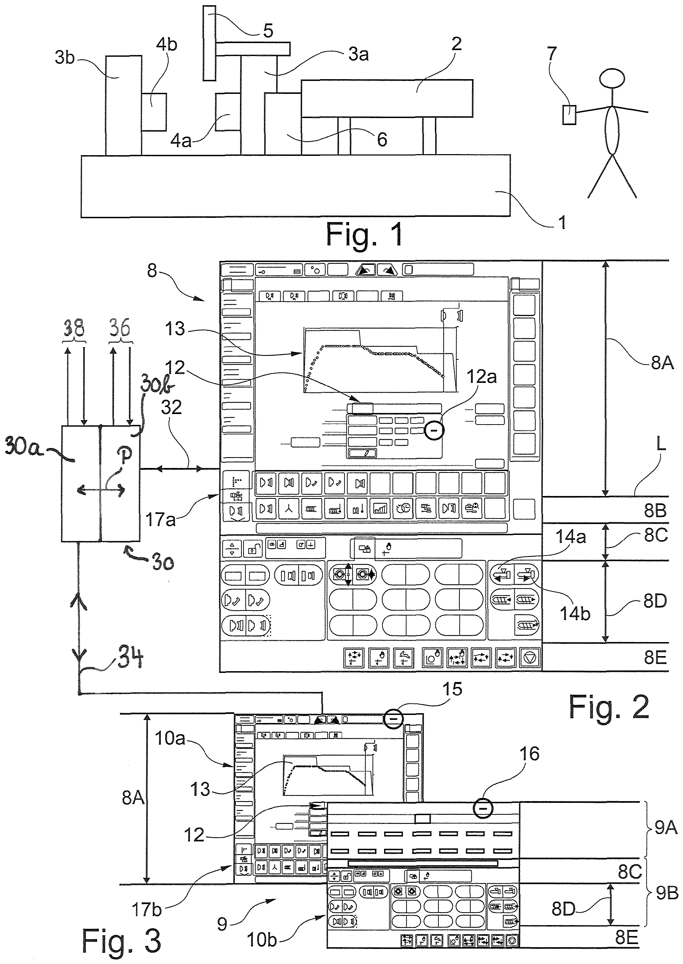

Aus der DE 10 2005 020 775 A1 (siehe dort Figur 1) ist ein Handhabungsgerät bekannt, dort Roboter genannt, das über ein stationäres Bediengerät in Form einer zentralen Kontroll- und Steuervorrichtung verfügt, welche Eingabe- und Ausgabemittel aufweist. Eingabemittel können Tasten, Schalter und Hebel sein. Als Ausgabemittel ist ein Bildschirm vorgesehen. Die zentrale Kontroll- und Steuervorrichtung ist über ein Verbindungskabel mit einem mobilen Bediengerät verbunden, welches auch als Handbediengerät bezeichnet wird. Das mobile Bediengerät bzw. das Handbediengerät weist ein Eingabefeld mit Eingabetasten auf. Des Weiteren besitzt es ein kleines Display, in dem Wörter oder einfache Zeichen angezeigt werden können. Um bei Bedarf mit einem derartigen Handbediengerät auch umfangreichere Kommunikationsfunktionen durchführen zu können, wird in der DE 10 2005 020 775 A1 vorgeschlagen, das Handbediengerät bzw. das mobile Bediengerät in der Weise auszubilden, dass es ein Grundbediengerät und ein optionales Erweiterungsmodul aufweist. Das Grundbediengerät umfasst Ein- und Ausgabemittel, welche zumindest die Grundein- und ausgabefunktionalität sicherstellen. Das Erweiterungsmodul ist zumindest teilweise über dem Grundgerät anordenbar und deckt dieses zumindest teilweise ab. Die Ein- und Ausgabemittels des Grundgerätes werden durch die Ein- und Ausgabemittel des Erweiterungsmoduls ersetzt und/oder ergänzt. Mit dem Erweiterungsmodul sich auch komplexere Ein- und Ausgabefunktionalitäten darstellbar. Die Ein- und Ausgabemöglichkeiten des Erweiterungsmoduls übersteigen daher insgesamt die Möglichkeiten des Grundbediengeräts.

Aus der DE 10 2007 050 073 B4 ist eine Steuervorrichtung einer Kunststoff verarbeitenden Maschine bekannt, wobei ein Bediengerät mit einem berührungsempfindlichen Bildschirm (Touchscreen) vorgesehen ist. Der Bildschirm ist softwaremäßig in einen ersten, oberen und einen zweiten, unteren Bildschirmbereich aufgeteilt. In dem oberen Bildschirmbereich können die Spritzgießmaschine oder Teile davon dargestellt werden. Es können aber auch Betriebsdaten wie beispielsweise Temperaturwerte, Druckwerte etc. dargestellt werden. Des Weiteren sind dort Softkeys vorhanden, die mittels Anordnung einer berührungsempfindlichen Touch-Oberfläche betätigt werden können. In dem zweiten unteren Bildschirmbereich sind Maschineneingabetasten bzw. Maschinenbedientasten softwaremäßig bzw. per grafischer Darstellung realisiert. Die Darstellungsweise der Maschineneingabetasten bzw. der -bedientasten hängt unter anderem von den an der Maschine zur Verfügung stehenden Funktionen und von der Betriebsweise ab. Je nach Betriebsweise oder aktuellem Betriebszustand sind bestimmte Bedientasten inaktiv geschaltet.

Aus der DE 10 2007 013 735 A1 ist eine Spritzgießmaschine bekannt, bei der eine elektronische Steuerung und mehrere mit dieser Steuerung in Kommunikation stehende Bildschirme mit Folien in OLED-Technologie (OLED: organic light emitting diode) vorgesehen sind, die lösbar an der Spritzgießmaschine befestigt sind. Die OLED-Technologie ermöglicht es, den Bildschirm in seinen Dimensionen derart auszubilden, dass er zum Beispiel in die Manteltasche eines Benutzers passt. Dadurch kann eine Bedienung der Steuerung so erfolgen, dass der Benutzer nicht an eine bestimmte Stelle an der Spritzgießmaschine gebunden ist. Diese OLED-Bildschirme können daher auch als mobiles Bediengerät bezeichnet werden. Zwischen diesen mobilen Bediengeräten und der zentralen Steuerung der Spritzgießmaschine kann eine Kabelsteckverbindung oder eine kabellose Funkverbindung vorhanden sein. Neben der Steuerung der Spritzgießmaschine ist auch vorgesehen, gegebenenfalls vorhandene Handhabungsgeräte ebenfalls über die zentrale Steuerung der Spritzgießmaschine und deren OLED-Bildschirme mit zu bedienen. Aus der DE102004051106A1 ist eine Spritzgießmaschine bekannt, die mindestens eine Bedieneinheit, mindestens eine Maschinensteuerung sowie mindestens ein Subsystems mit einer eigenen Steuerungseinrichtung aufweist. Die Maschinensteuerung und die Steuerungseinrichtung des Subsystems erzeugen jeweils eine Bildschirmausgabe und sind über diese bedienbar. Mindestens eine der Bedieneinheiten ist sowohl mit der Maschinensteuerung als auch mit der mindestens einen Steuerungseinrichtung des Subsystems zur Datenübertragung verbunden oder verbindbar. Bei den Subsystemen kann es sich um einen oder mehrere Roboter handeln. Als mobiles Bediengerät kann PC oder ein Laptop vorgesehen werden. Gemäß diesem Stand der Technik ist vorgesehen, dass die Bildschirmausgaben der Maschinensteuerung und der Steuerungseinrichtungen der Subsysteme in verschiedenen Bereichen des Bildschirms der mindestens einen Bedieneinheit darstellbar und bedienbar sind. Um eine gleichzeitige Darstellung der mehreren Bildschirmausgaben auf ein- und demselben Bildschirm einer Bedieneinheit zu ermöglichen, muss die Bildschirmausgabe der Maschinensteuerung und der Steuerungseinrichtungen der Subsysteme entsprechend skaliert dargestellt werden. Im Ergebnis führt dies zu einer verkleinerten und somit schlechter erkennbaren Gesamtdarstellung.

Ausgehend von dem vorgenannten Stand der Technik liegt die Aufgabe der Erfindung darin, eine Vorrichtung und ein Verfahren zum Bedienen einer mit einem Handhabungsgerät ausgestatteten Spritzgießmaschine anzugeben, mit der das Einrichten und Betreiben bzw Bedienen sowohl der Maschine als auch des Handhabungsgeräts schneller und einfacher durchgeführt werden kann.

Die Lösung dieser Aufgabe erfolgt hinsichtlich der Vorrichtung durch die Merkmale des Anspruchs 1 und hinsichtlich des Verfahrens durch die Merkmale des Anspruchs 16. Vorteilhafte Weiterentwicklungen und Ausgestaltungen finden sich in den abhängigen Ansprüchen.

Dadurch, dass ein erstes an der Maschine befestigtes stationäres Bediengerät und ein zweites mobiles Bediengerät vorgesehen ist, wobei jedes Bediengerät Ein- und Ausgabemittel aufweist, wobei das stationäre Bediengerät sowohl zum Bedienen der Maschine als auch zum Bedienen des Handhabungsgeräts ausgestaltet ist und wobei das mobile Bediengerät sowohl zum Bedienen des Handhabungsgeräts als auch zum Bedienen der Maschine ausgestaltet ist, steht sowohl für die Maschine als auch für das Handhabungsgerät jeweils ein komplettes bzw. vollwertiges Bediengerät zur Verfügung. Während das eine vollwertige Bediengerät "klassisch" als stationäres Bediengerät wie üblich an der Maschine, insbesondere an der Spritzgießmaschine befestigt ist, steht noch ein weiteres mobiles Bediengerät mit vollwertiger Ausstattung zum Einrichten und Bedienen von Handhabungsgerät und Maschine zur Verfügung. Mit dem mobilen Bediengerät kann eine Bedienperson sich frei um die Maschine herum bewegen und beispielsweise mit Sicht auf das Handhabungsgerät dasselbe einrichten und bedienen. Durch die vollwertige Ausstattung des mobilen Bediengeräts können von diesem Bediengerät auch Einstellungen und Bedienungen an der Maschine selbst vorgenommen werden. Beispielweise könnten von diesem mobilen Bediengerät Einstellungen betreffend die Schließeinheit einer Spritzgießmaschine vorgenommen und überprüft werden. Durch einfaches "Umschalten" des mobilen Bediengeräts auf die Einstellseiten für das Handhabungsgerät kann auf einfache und schnelle Art beispielsweise eine Anpassung der Bewegungen des Handhabungsapparates an die Bewegungen der beweglichen Teile der Schließeinheit vorgenommen werden.

Wenigstens die Ausgabemittel des stationären und des mobilen Bediengeräts können jeweils als Bildschirm ausgebildet sein, wobei der Bildschirm des mobilen Bediengeräts kleiner ist als der Bildschirm des stationären Bediengeräts. Vorgebbare Bereiche einer Bildschirmseite des Bildschirms des stationären Bediengeräts können nacheinander auf dem Bildschirm des mobilen Bediengeräts dargestellt werden. Es soll also trotz der unterschiedlichen Größe eine Vollintegration vorhanden sein, d.h. auch auf dem kleineren Bildschirm des mobilen Bediengeräts sollen alle Bildschirmseiten dargestellt werden können, die auch auf dem stationären Bediengerät darstellbar sind.

Das mobile Bediengerät ist in dem Sinne komplett bzw. vollwertig ausgestattet, als es einerseits einem vollwertigen Bediengerät für das Handhabungsgerät entspricht, andererseits aber auch alle Funktionen eines vollwertigen Bediengeräts der Maschine übernehmen oder darstellen kann. Umgekehrt ist das stationäre Bediengerät in dem Sinne komplett bzw. vollwertig ausgestattet, als es einerseits einem vollwertigen Bediengerät für die Maschine entspricht, andererseits aber auch alle Funktionen eines vollwertigen Bediengeräts des Handhabungsgeräts übernehmen oder darstellen kann.

In vorteilhafter Weise sind sowohl auf dem stationären Bediengerät als auch auf dem mobilen Bediengerät alle für das Bedienen sowohl der Maschine als auch des Handhabungsgeräts erforderlichen Bedientasten vorhanden oder können erzeugt bzw. dargestellt werden. Hierzu können die Ein- und Ausgabemittel auf dem stationären Bediengerät und auf dam mobilen Bediengerät jeweils als berührungsempfindlicher Bildschirm (Touchscreen-Bildschirm) ausgestaltet sein.

Im Sinne einer Vollausstattung der beiden Bediengeräte bzw. einer Vollintegration wird es als vorteilhaft angesehen, wenn sowohl auf dem stationären als auch auf dem mobilen Bediengerät alle Bildschirmseiten betreffend die Bedienung bzw. die Steuerung der Maschine und alle Bildschirmseiten betreffend die Bedienung bzw. die Steuerung des Handhabungsgeräts darstellbar sind.

Um die Bedienung der beiden Bediengeräte zu vereinfachen und zur Vermeidung von Fehlbedienungen kann vorgesehen werden, dass die Gestalt der Bedientasten für die Maschine auf dem stationären und auf dem mobilen Bediengerät die Gleiche ist. Die Darstellung der Maschinenbedientastatur ist also auf den beiden Bediengeräten vorteilhaft identisch. Dies erhöht die Sicherheit beim Einrichten und Betreiben der Maschine, weil die Gefahr von Fehlbedienungen reduziert wird. Gleiche Funktionen der Maschine sind mit gleichen Bedientasten auf stationärem und mobilem Bediengerät dargestellt oder darstellbar. Beispielsweise werden Maschinenbedientasten für die Funktionen "Spritzaggregat vor" bzw. "Spritzaggregat zurück" in identischer Weise auf den beiden Bediengeräten angezeigt, wenn die jeweils hierzu gehörige Bildschirmseite auf dem betreffenden Bediengerät aufgerufen worden ist.

Das Vorstehende gilt sinngemäß auch für die Gestalt der Bedientasten für das Handhabungsgerät auf dem stationären und auf dem mobilen Bediengerät. Die Bedientasten für das Handhabungsgerät, beispielsweise das Hoch- und Runterfahren eines Greifers, werden in identischer Weise auf den beiden Bediengeräten angezeigt, wenn die hierzu gehörige Bildschirmseite auf dem betreffenden Bediengerät aufgerufen worden ist.

Zur Verbesserung des Bedienkomforts kann vorgesehen werden, dass das stationäre Bediengerät und/oder das mobile Bediengerät über Umschaltelemente verfügen, mit deren Betätigung die Darstellung auf dem Bildschirm verändert werden kann, wobei zwischen einer Darstellung der Anzeige- und Bedienfeldes der Maschine und einer Darstellung der Anzeige- und Bedienfeldes des Handhabungsgerät gewechselt werden kann.

In besonders vorteilhafter Ausbildung kann vorgesehen werden, dass das stationäre Bediengerät und das mobile Bediengerät jeweils als berührungsempfindlicher Bildschirm (Touchscreen) ausgebildet sind, wobei der Bildschirm des mobilen Bediengeräts kleiner ist als der Bildschirm des stationären Bediengeräts. Dies erleichtert die Handhabung des mobilen Bediengeräts. Andererseits soll jedoch das mobile Bediengerät die gleiche Vollausstattung aufweisen wie das größere stationäre Bediengerät. Es soll also trotz der unterschiedlichen Größe eine Vollintegration vorhanden sein, d.h. auch auf dem kleineren Bildschirm des mobilen Bediengeräts sollen alle Bildschirmseiten dargestellt werden können, die auch auf dem stationären Bediengerät darstellbar sind. Zu diesem Zweck ist vorgesehen, dass vorgebbare Bereiche einer Bildschirmseite des Bildschirms des stationären Bediengeräts nacheinander auf dem Bildschirm des mobilen Bediengeräts darstellbar sind. Beispielsweise kann vorgesehen werden, dass der Bildschirm auf dem stationären Bediengerät softwaremäßig geteilt ist, insbesondere in einen oberen und einen unteren Teil. Die beiden Teile des Bildschirms des stationären Bediengeräts sind dann jeweils für sich genommen auf dem Bildschirm des mobilen Bediengeräts einzeln darstellbar. Ob alle Elemente der Darstellung des größeren Touchscreens identisch übernommen werden oder ob es geringfügige Anpassungen gibt, hängt von den jeweiligen Umständen ab. Zwischen der Darstellung des einen Teils des Bildschirms des stationären Bediengeräts und der Darstellung des anderen Teils des Bildschirms kann dann hin- und hergewechselt werden. Im Bedarfsfalle können auch nur bestimmte Bereiche einer Bildschirmseite des stationären Bediengeräts auf dem mobilen Bediengerät dargestellt werden. Sollte ein solcher Bereich kleiner sein als die auf dem Touchscreen des mobilen Bediengeräts verfügbare Bildschirmfläche, können in dem noch freien Bereich sonstige Einstell- oder Bedienelemente angezeigt werden, je nach Bedarf. Jedenfalls können auf diese Art und Weise auf dem kleineren mobilen Bediengerät bzw. auf dem kleineren Touchscreen des mobilen Bediengeräts alle Bildschirmseiten des stationären Bediengeräts dargestellt werden.

Um auch umfangreiche bzw. komplexere Einrichtungen oder eine vollständige Einrichtung bzw. Programmierung der Maschine über das mobile Bediengerät zu ermöglichen, kann vorgesehen werden, dass auf dem mobilen Bediengerät Bedientasten der Maschine und Eingabefelder zum Eingeben von Parametern für den Betrieb der Maschine vorhanden oder darstellbar sind. Das Vorstehende gilt sinngemäß auch für das Handhabungsgerät. Demzufolge sollten auf dem stationären Bediengerät Bedientasten des Handhabungsgeräts und Eingabefelder zum Eingeben von Parametern für den Betrieb des Handhabungsgeräts vorhanden oder darstellbar sein, so dass auch umfangreiche bzw. komplexere Einrichtungen oder eine vollständige Einrichtung des Handhabungsgeräts möglich wird.

Im Sinne der vorliegenden Erfindung soll das Einrichten auch die Programmierung eines Ablaufs der Maschine umfassen. Insbesondere soll das Einrichten auch die Programmierung eines Ablaufs eines Spritzgießzyklus umfassen. Diese Programmierung kann mittels grafischer Symbole für bestimmte Funktionen erfolgen. Diese Symbole können auch als Icon bezeichnet werden. Vorteilhafterweise werden für die Programmierung eines Spritzgießzyklus auf dem mobilen Bediengerät die gleichen Icons bereitgestellt wie auf dem stationären Bediengerät. Insgesamt soll die Bedienphilosophie bzw. die Programmierungsphilosophie von stationärem und mobilem Bediengerät die Gleiche sein.

Insgesamt ist daher erfindungsgemäß vorgesehen, dass die Spritzgießmaschine auch von dem mobilen Bediengerät aus vollumfänglich eingerichtet bzw. programmiert und betrieben werden kann.

Die Darstellung der Bildschirmseiten auf dem stationären Bediengerät und die Darstellung der Bildschirmseiten auf dem mobilen Bediengerät sind vorzugsweise unabhängig voneinander. Demgegenüber ist vorzugsweise vorgesehen, dass die Anzeige von Daten oder graphischen Informationen jedoch immer von derjenigen Steuerungskomponente erfolgt, welche die Daten oder Signale erhalten hat. Falls es sich also um Daten oder Signale handelt, die das Handhabungsgerät betreffen, so werden diese Daten oder Signale von der Steuerungskomponente des Handhabungsgeräts an die beiden Bediengeräte übermittelt. Falls es sich um Daten oder Signale handelt, die die eigentliche Spritzgießmaschine betreffen, so werden diese Daten oder Signale von der Steuerungskomponente der Spritzgießmaschine an die beiden Bediengeräte übermittelt. Das Erzeugen des Layouts der Bildschirmseiten einerseits und das Anzeigen von Inhalten in diesen Layouts (Daten, graphische Informationen von Linearroboter und Spritzgießmaschine) erfolgt also unabhängig oder getrennt voneinander. Die beiden vorgenannten Steuerungskomponenten können zusammengefasst als zentrale Steuerung oder zentrale Steuerungseinrichtung einer Gesamtanlage angesehen werden. Jede dieser Steuerungskomponenten kann eine oder mehrere CPU's aufweisen. Die Gesamtanlage kann neben einer Spritzgießmaschine und einem Handhabungsgerät noch weitere Bestandteile aufweisen, beispielsweise ein Heißläufersystem oder ein Temperiergerät. Den weiteren Bestandteilen können innerhalb der zentralen Steuerung weitere Steuerungskomponenten zugeordnet sein. Die weiteren Steuerungskomponenten können aber auch losgelöst von der zentralen Steuerungseinrichtung in das Datennetzwerk der Gesamtanlage integriert sein.

Nachfolgend soll die Erfindung anhand eines Ausführungsbeispiels und unter Bezugnahme auf die Figuren 1 bis 3 näher erläutert werden.

Die Figur 1 zeigt schematisch eine Spritzgießmaschine mit einem Maschinenbett 1, auf dem eine Spritzeinheit 2 und eine Schließeinheit 3 angeordnet sind. Die Schließeinheit 3 umfasst eine feststehende Formaufspannplatte 3a und eine dieser gegenüber verfahrbare bewegliche Formaufspannplatte 3b. Die beiden Formaufspannplatten tragen Formhälften 4a und 4b, die im geschlossenen Zustand Kavitäten bilden. Mittels der Spritzeinheit 2 kann eine Kunststoffschmelze hergestellt und in die Kavitäten eingespritzt werden, wo die Kunststoffschmelze zu Kunststoff-Formteilen aushärten kann. Nach dem Öffnen der Formhälften 4a und 4b können diese Formteile mittels eines an sich bekannten Linearroboters 5 entnommen werden. Anstelle des Linearroboters 5 können auch andere Arten von Handhabungsgeräten vorgesehen werden. Beispielsweise könnte ein Sechs-Achs-Industrieroboter neben der Spritzgießmaschine auf dem Boden installiert sein. Im Bereich zwischen der feststehenden Formaufspannplatte 3a und dem vorderen Ende der Spritzeinheit 2 ist ein stationäres Bediengerät 6 zum Einrichten und Betreiben der Spritzgießmaschine vorgesehen. Dieses Bediengerät 6 verfügt über eine vollwertige Ausstattung zum Einrichten bzw. Programmieren der Spritzgießmaschine einerseits sowie zum Einrichten bzw. Programmieren des Linearroboters 5 andererseits. Selbstverständlich können auch alle anderen für den Betrieb der Spritzgießmaschine und des Linearroboters erforderlichen Einstellungsarbeiten über dieses Bediengerät 6 vorgenommen werden. Vorzugsweise verfügt das Bediengerät über einen berührungsempfindlichen Bildschirm, auch Touchscreen genannt. In besonders bevorzugter Ausführungsform wird die gesamte Oberfläche des Bediengeräts 6 als Touchscreen ausgeführt und alle Eingabe- und Bedienfelder werden softwaremäßig auf dem Bediengerät 6 dargestellt, wie dies aus der eingangs genannten DE102007050073B4 der Anmelderin bekannt ist. Es können aber auch alternativ oder zusätzlich weitere Schalter und Tasten sowie ein Bildschirm zur Ein- und Ausgabe von Daten vorgesehen werden. Die Bedieneinheit 6 steht über eine bidirektionale Datenverbindung 32 mit der Steuerungskomponente 30b der Spritzgießmaschine in Verbindung (siehe Figur 2). Die bidirektionale Datenverbindung kann als Datenleitung 32 ausgebildet sein, das heißt die Datenverbindung erfolgt mittels Kabel. Die Datenübertragung kann aber auch drahtlos bzw. per Funk erfolgen, das heißt, dass die bidirektionale Datenverbindung 32 als Funkverbindung ausgebildet ist.

In der Figur 1 ist des Weiteren rechts neben der Spritzgießmaschine eine Bedienperson dargestellt, welche in einer Hand ein mobiles Bediengerät 7 hält. Die äußeren Abmessungen des mobilen Bediengeräts 7 sind erheblich kleiner als die äußeren Abmessungen des stationären Bediengeräts 6. Vorzugsweise verfügt auch das mobile Bediengerät 7 über einen berührungsempfindlichen Bildschirm (Touchscreen). In besonders bevorzugter Ausführungsform wird die gesamte Oberfläche des Bediengeräts 7 als Touchscreen ausgeführt und alle Eingabe- und Bedienfelder werden softwaremäßig auf dem Bediengerät 6 dargestellt, wie dies aus der eingangs genannten DE102007050073B4 der Anmelderin bekannt ist. Es können aber auch alternativ oder zusätzlich weitere Schalter und Tasten sowie ein Bildschirm zur Ein- und Ausgabe von Daten vorgesehen werden.

Erfindungsgemäß ist nun vorgesehen, dass nicht nur das stationäre Bediengerät 6 sowohl zum Bedienen der Spritzgießmaschine als auch zum Bedienen des Handhabungsgeräts bzw. Linearroboters 5 ausgestaltet ist, sondern dass auch das mobile Bediengerät 7 sowohl zum Bedienen des Linearroboters 5 als auch zum Bedienen der Spritzgießmaschine ausgestaltet ist. Sowohl auf dem stationären Bediengerät 6 als auch auf dem mobilen Bediengerät 7 sind alle für das Bedienen sowohl der Spritzgießmaschine als auch des Linearroboters 5 erforderlichen Bedientasten vorhanden oder können dort erzeugt werden. Sowohl auf dem stationären als auch auf dem mobilen Bediengerät sind alle Bildschirmseiten betreffend die Bedienung bzw. Steuerung der Spritzgießmaschine, einschließlich des Einrichtens bzw. des Programmierens der Spritzgießmaschine, und alle Bildschirmseiten betreffend die Bedienung bzw. die Steuerung des Linearroboters 5, einschließlich des Einrichtens bzw. des Programmierens des Linearroboters, darstellbar.

Anhand der Figuren 2 und 3 soll der Kerngedanke der vorliegenden Erfindung näher erläutert werden.

Die Figur 2 zeigt den berührungsempfindlichen Bildschirm bzw. Touchscreen 8 des stationären Bediengeräts 6. Der Touchscreen 8 kann gedanklich in mehrere Bereiche 8A - 8E aufgeteilt werden, deren Bedeutung weiter unten erläutert werden soll. Je nach Ausführung des Bediengeräts kann der Touchscreen 8 nahezu die gesamte Oberfläche des Bediengeräts 6 ausmachen. Die Figur 3 zeigt den berührungsempfindlichen Bildschirm bzw. Touchscreen 9 des mobilen Bediengeräts 7. Je nach Ausführung des Bediengeräts 7 kann auch der Touchscreen 9 nahezu die gesamte Oberfläche des Bediengeräts 7 ausmachen. Der Touchscreen 9 ist in der Figur 3 in zwei verschiedenen Betriebszuständen bzw. Einstellungen dargestellt. Der Touchscreen 9 zeigt in der einen Einstellung die Bildschirmseite 10a an und in einer anderen Einstellung die Bildschirmseite 10b. In der Darstellung der Bildschirmseite 10b kann der Touchscreen 9 gedanklich in mehrere Bereiche 9A und 9B aufgeteilt werden, deren Bedeutung weiter unten erläutert werden soll.

Die zentrale Steuerung 30 der Gesamtanlage, das.heißt im vorliegenden Beispiel die zentrale Steuerung 30 der mit einem Handhabungsgerät (z.B. einem Linearroboter) ausgestatteten Spritzgießmaschine umfasst zwei Steuerungskomponenten mit je einer eigenen CPU-Einheit, nämlich eine erste Steuerungskomponente 30a, welche die Steuerungseinrichtung für den Linearroboter 5 bildet und eine zweite Steuerungskomponente 30b, welche die Steuerungseinrichtung für die eigentliche Spritzgießmaschine bildet. Jede CPU-Einheit kann eine oder mehrere CPU's aufweisen. Die erste Steuerungskomponente 30a für die Steuerung des Linearroboters 5 ist über Datenleitungen 38 mit den Aktuatoren und Sensoren des Linearroboters 5 verbunden. Die zweite Steuerungskomponente 30b für die Steuerung der eigentlichen Spritzgießmaschine ist über Datenleitungen 36 mit den Aktuatoren und Sensoren der Spritzgießmaschine verbunden. Zwischen den beiden Steuerungskomponenten 30a und 30b kann ein Datenaustausch stattfinden (angedeutet mit Doppelpfeil P). Dies bedeutet, dass zwischen der CPU-Einheit der Steuerungseinrichtung für den Linearroboter und der CPU-Einheit der Steuerungseinrichtung für die eigentliche Spritzgießmaschine Daten ausgetauscht werden können. Die Steuerungskomponente 30b für die eigentliche Spritzgießmaschine ist über eine erste bidirektionale Datenleitung 32 mit dem stationären Bediengerät 6 bzw. dem stationären Touchscreen 8 verbunden. Über diese bidirektionale Datenleitung 32 werden Videosignale von der Steuerungskomponente 30b an den Bildschirm 8 übertragen. Die Bildschirmseiten auf dem Bildschirm 8 werden über diese Datenleitung 32 erzeugt und mit Inhalt gefüllt. Dies bedeutet, dass sowohl das Layout der Bildschirmseiten erzeugt wird als auch Anzeigefelder mit Daten oder graphische Darstellungen mit Informationen gefüllt werden, bspwe mit einer Temperaturangabe (z.B. 200°C) oder einem Kurvenverlauf für einen bestimmten Parameter. Für die Erzeugung des Layouts ist ausschließlich die Steuerungskomponente 30b verantwortlich. Die anzuzeigenden Daten kommen je nach Betriebsmodus von der Steuerungskomponente 30a oder von der Steuerungskomponente 30b, wie weiter unten noch ausgeführt wird. Über die gleiche Datenleitung 32 werden auf dem Touchscreen 8 vorgenommene Eingaben oder über eine Tastatur an dem Bediengerät 6 vorgenommene Eingaben an die zentrale Steuerung 30 übermittelt. Je nach Betriebsmodus werden diese Eingaben an die Steuerungskomponente 30a oder an die Steuerungskomponente 30b übertragen. Falls an dem Bediengerät 6 Schnittstellen zur Datenübertragung vorgesehen sind, beispielsweise eine USB-Schnittstelle, können auch Daten von dieser Schnittstelle an die zentrale Steuerung 30 übermittelt werden.

In analoger Weise ist die Steuerungskomponente 30a für den Linearroboter 5 über eine zweite bidirektionale Datenleitung 34 mit dem mobilen Bediengerät 7 verbunden. Über diese bidirektionale Datenleitung 34 werden Videosignale von der Steuerungskomponente 30a an den Bildschirm 9 übertragen. Die Bildschirmseiten auf dem Bildschirm 9 werden über diese Datenleitung 34 erzeugt und mit Inhalt gefüllt.

Dies bedeutet, dass sowohl das Layout der Bildschirmseiten erzeugt wird als auch Anzeigefelder mit Daten oder graphische Darstellungen mit Informationen gefüllt werden, beispielsweise mit einer Positionsangabe für ein Element des Linearroboters 5 (z.B. 50cm). Für die Erzeugung des Layouts der Bildschirmseiten ist ausschließlich die Steuerungskomponente 30a des Handhabungsgeräts bzw. die hierzu gehörige CPU-Einheit verantwortlich. Die anzuzeigenden Daten oder graphischen Informationen kommen je nach Betriebsmodus von dem Steuerungsteil 30a oder von dem Steuerungsteil 30b, wie weiter unten noch ausgeführt wird. Über die gleiche Datenleitung 34 werden auf dem Touchscreen 9 vorgenommene Eingaben oder über eine Tastatur an dem mobilen Bediengerät 7 vorgenommene Eingaben an die zentrale Steuerung 30 übermittelt. Falls an dem mobilen Bediengerät 7 Schnittstellen zur Datenübertragung vorgesehen sind, beispielsweise eine USB-Schnittstelle, können auch Daten von dieser Schnittstelle an die zentrale Steuerung 30 übermittelt werden.

Im Ergebnis ist somit jeder Steuerungskomponente ein ganz bestimmtes Bediengerät zugeordnet, was die Darstellung der Bildschirmseiten anbelangt. Das Layout der Bildschirmseiten eines bestimmten Bediengeräts wird also ausschließlich von der diesem Bediengerät zugeordneten Steuerungskomponente erzeugt. Die Darstellung der Bildschirmseiten auf dem stationären Bediengerät und die Darstellung der Bildschirmseiten auf dem mobilen Bediengerät sind somit unabhängig voneinander. Die Anzeige von Daten oder graphischen Informationen erfolgt jedoch immer von derjenigen Steuerungskomponente, welche die Daten oder Signale erhalten hat. Falls es sich um Daten oder Signale handelt, die den Linearroboter 5 betreffen, so werden diese Daten oder Signale von der Steuerungskomponente 30a an die beiden Bediengeräte übermittelt. Falls es sich um Daten oder Signale handelt, die die eigentliche Spritzgießmaschine betreffen, so werden diese Daten oder Signale von der Steuerungskomponente 30b an die beiden Bediengeräte übermittelt. Das Erzeugen des Layouts der Bildschirmseiten einerseits und das Anzeigen von Inhalten in diesen Layouts (Daten, graphische Informationen von Linearroboter und Spritzgießmaschine) erfolgt also unabhängig oder getrennt voneinander.

Das stationäre Bediengerät 6 ist somit sowohl zum Bedienen der Spritzgießmaschine als auch zum Bedienen des Handhabungsgeräts, d.h. des Linearroboters 5 ausgestaltet ist. Umgekehrt ist auch das mobile Bediengerät 7 sowohl zum Bedienen des Handhabungsgeräts als auch zum Bedienen der Maschine ausgestaltet. Dies soll an folgenden Beispielen erläutert werden. Es soll angenommen werden, dass der Linearroboter 5 von beiden Bediengeräten 6 und 7 aus bedient werden soll. Hierzu ist in den Bediengeräten 6 und 7 jeweils der Betriebsmodus "Handhabungsgerät" anzuwählen. Das Layout der Bildschirmseiten auf dem stationären Bediengerät 6 wird ausschließlich von der Steuerungskomponente 30b der eigentlichen Spritzgießmaschine erzeugt. Es werden jedoch Bildschirmseiten für die Einstellung und/oder Bedienung des Linearroboters 5 erzeugt und angezeigt. Die anzuzeigenden Daten selbst kommen von der Steuerungskomponente 30a des Linearroboters. Diese Daten werden von der Steuerungskomponente 30a erzeugt und über die Steuerungskomponente 30b an das stationäre Bediengerät 6 übertragen und dort angezeigt. Das Layout der Bildschirmseiten auf dem mobilen Bediengerät 7 wird ausschließlich von der Steuerungskomponente 30a des Linearroboters erzeugt, wobei Bildschirmseiten für die Einstellung und/oder Bedienung des Linearroboters erzeugt und angezeigt werden. Die anzuzeigenden Daten werden von der Steuerungskomponente 30a erzeugt und von dort direkt an das mobile Bediengerät 7 übertragen und dort angezeigt. Eingaben an dem stationären Bediengerät 6 werden über die Datenleitung 32 und die Steuerungskomponente 30b "hindurch" an die Steuerungskomponente 30a für den Linearroboter übertragen. Eingaben an dem mobilen Bediengerät 7 werden über die Datenleitung 34 direkt an die Steuerungskomponente 30a für den Linearroboter übertragen. In einem nachfolgenden Schritt soll es nun darum gehen, dass Einstellungen an der eigentlichen Spritzgießmaschine vorgenommen werden sollen, wobei die Spritzgießmaschine von beiden Bediengeräten 6 und 7 aus bedient werden soll. Hierzu ist in den Bediengeräten 6 und 7 jeweils der Betriebsmodus "Spritzgießmaschine" anzuwählen. Das Layout der Bildschirmseiten auf dem stationären Bediengerät 6 wird weiterhin ausschließlich von der Steuerungskomponente 30b der eigentlichen Spritzgießmaschine erzeugt. Im Unterschied zu vorher werden nunmehr Bildschirmseiten für die Einstellung und/oder Bedienung der Spritzgießmaschine angezeigt. Die auf dem Bediengerät 6 anzuzeigenden Daten kommen im Unterschied zu vorher von der Steuerungskomponente 30b der eigentlichen Spritzgießmaschine. Das Layout der Bildschirmseiten auf dem mobilen Bediengerät 7 wird ausschließlich von der Steuerungskomponente 30a des Linearroboters erzeugt, wobei jedoch Bildschirmseiten für die Einstellung und/oder Bedienung der Spritzgießmaschine angezeigt werden. Die anzuzeigenden Daten selbst werden von der Steuerungskomponente 30b der Spritzgießmaschine erzeugt, an die Steuerungskomponente 30a des Linearroboters und von dort über die Datenleitung 34 an den Bildschirm 9 des mobilen Bediengeräts 7 übertragen. Eingaben an dem stationären Bediengerät 6 werden über die Datenleitung 32 an die Steuerungskomponente 30b für die Spritzgießmaschine übertragen. Eingaben an dem mobilen Bediengerät 7 werden über die Datenleitung 34 an die Steuerungskomponente 30a für den Linearroboter und von dort weiter an die Steuerungskomponente 30b für die Spritzgießmaschine übertragen.

Wie aus den Figuren 1 - 3 unschwer zu erkennen ist, sind die äußeren Abmessungen des mobilen Bediengeräts 7 und von dessen Touchscreen 9 deutlich kleiner als die äußeren Abmessungen des stationären Bediengeräts 6 und von dessen Touchscreen 8. Die deutlich geringere Größe des mobilen Bediengeräts erleichtert dessen Handhabung durch eine Bedienperson. Es ist für die Praxis vorteilhaft, wenn einer Bedienperson ein vergleichsweise kleines und handliches Bediengerät zur Verfügung steht, das die Bedienperson mit sich herumtragen kann. Typischerweise ist das mobile Bediengerät 7 nur etwa halb so groß wie das stationäre Bediengerät 6 oder sogar noch kleiner. Demgemäß ist auch der Touchscreen 9 typischerweise nur etwa halb so groß wie der Touchscreen 8 oder sogar noch kleiner. In der hier gezeigten Ausführungsform entspricht die Größe des Touchscreens 9 in der Figur 3 im wesentlichen dem oberhalb der Linie L befindlichen Bereich 8A des Touchscreens 8 aus der Figur 2. Grundsätzlich kann der kleinere Touchscreen 9 auch einen kleineren oder größeren Bereich des Touchscreens 8 ausmachen.

Die Bildschirmseite 10a entspricht in Ihrer Darstellung und in Bezug auf die zur Verfügung stehenden Funktionalitäten dem oberhalb der Linie L befindlichen Bereich 8A des Touchscreen 8. Auf dem Touchscreen 10a können somit die gleichen Eingaben vorgenommen werden wie auf dem Bereich 8A des Touchscreens 8. Beispielsweise kann softwaremäßig ein Fenster 12 mit Eingabeelementen oder Eingabefeldern 12a identisch auf dem Touchscreen 8 und dem Touchscreen 10a dargestellt werden. Die Gestalt der Eingabefelder 12a ist auf beiden Bildschirmen 8 und 10a somit die Gleiche. Beispielsweise könnte es sich um Eingabefelder für die Eingabe von Temperatur- oder Druckwerten handeln. Das Ergebnis der Eingabe ist unabhängig davon, ob die Eingabe auf dem Touchscreen 8 oder dem Touchscreen 10a gemacht wird. In beiden Fällen wird die Eingabe an die Steuerung 30 der Spritzgießmaschine übertragen und bewirkt die gewünschte Einstellung an der Spritzgießmaschine. Ergibt sich aufgrund dieser Eingabe eine Veränderung in Bezug auf den in dem Graph 13 gezeigten Verlauf eines bestimmten Parameters, so wird diese Veränderung identisch auf dem Touchscreen 8 und auf dem Touchscreen 9 - in dessen Betriebsstellung gemäß 10a - angezeigt.

Die Bildschirmseite 10b entspricht in einem Bereich 9B in Ihrer Darstellung und in Bezug auf die zur Verfügung stehenden Funktionalitäten den Bereichen 8C, 8D und 8E der Bildschirmseite aus Figur 2. Diese Bereiche 8C, 8D und 8E füllen jedoch nicht die gesamte Oberfläche des Touchscreens 9, so dass ein Bereich 9A verbleibt, der für weitere Anzeigen und/oder Eingaben zur Verfügung steht. Die Bereiche 8C, 8D und 8E werden identisch auf dem Touchscreen 8 und dem Touchscreen 10a dargestellt. Daher werden auch alle Maschinenbedientasten aus dem Bereich 8D identisch auf dem Touchscreen 8 und auf dem Touchscreen 9 - in dessen Betriebsstellung gemäß 10b - angezeigt. Die Gestalt der Maschinenbedientasten sowie die Gestalt der sonstigen Tasten und/oder Anzeigen ist auf beiden Bildschirmen 8 und 10a somit die Gleiche. Beispielhaft seien diesbezüglich die Maschinenbedientasten für die Funktionen "Spritzaggregat vor" bzw. "Spritzaggregat zurück" genannt, die in den Figuren 2 und 3 mit den Bezugszeichen 14a und 14b gekennzeichnet sind. Die vorgenannten Bewegungen des Spritzaggregats können somit mit den gleichen Maschinenbedientasten und mit der gleichen Wirkung (nämlich der gewünschten Bewegung) sowohl an dem stationären Bediengerät 6 als auch an dem mobilen Bediengerät 7 vorgenommen werden.

Vorzugsweise ist nicht nur eine gleiche Gestalt bzw. gleiche Gestaltung der Bedientasten sowie sonstiger Tasten und/oder Anzeigen vorgesehen, sondern es soll vorzugsweise die gesamte Bedien- und Anzeigephilosophie auf beiden Bediengeräten die Gleiche sein.

Aufgrund der geringeren Abmessungen des mobilen Bediengeräts 7 bzw. dessen Touchscreen 9 ist erfindungsgemäß vorgesehen, dass vorgebbare Bereiche des Touchscreens 8 des stationären Bediengeräts 6 nacheinander auf dem Touchscreen 9 des mobilen Bediengerät 6 bzw auf dessen Touchscreen 9 dargestellt werden können. Eine Bildschirmseite des großen Touchscreen 8 wird sozusagen softwaremäßig in mehrere kleinere Bereiche aufgeteilt, die auf den kleineren Touchscreen passen und dort als separate Bildschirmseiten angezeigt werden können. Die Erzeugung der Bildschirmseiten auf dem großen Touchscreen 8 und die Erzeugung der Bildschirmseiten auf dem kleinen Touchscreen 9 erfolgt jedoch unabhängig voneinander, wie oben beschrieben. Anders ausgedrückt bedeutet dies, dass es nur den Anschein hat, als ob einzelne Bereiche einer Bildschirmseite des großen Touchscreens 8 von diesem nacheinander an das mobile Bediengerät 7 übertragen und dort auf dem kleinen Touchscreen 9 nacheinander dargestellt würden. Dies ist jedoch nicht der Fall. Vielmehr ist es so, dass die auf dem kleinen Touchscreen 9 anzuzeigenden Bereiche in der Steuerungskomponente 30a des Linearroboters selbst erzeugt und auf dem Touchscreen 9 angezeigt werden. Hierbei ist weiterhin vorgesehen, dass eine Umschalttaste 15 vorgesehen ist, mit der auf direktem Wege auf die Darstellung gemäß der Bildschirmseite 10b umgeschaltet werden kann. Daher kann auf dem mobilen Bediengerät 6 auf direktem Wege von der Anzeige des Bereichs 8A zu der Maschinenbedientastatur gemäß dem Bereich 8D gewechselt werden. Auf der Bildschirmseite 10b kann eine "Return"-Taste 16 als Umschalttaste vorgesehen werden, um von der Anzeige gemäß 10b mit den Maschinenbedientasten zurück auf die Anzeige gemäß 10a zu gelangen. Anstelle der Verwendung von Umschalttasten 15 bzw. 16 kann das "Umschalten" zwischen den Bildschirmseiten 10a und 10b und umgekehrt auch per Gestik erfolgen, beispielsweise durch Schieben oder Wischen der Bildschirmseiten nach links oder rechts oder nach oben oder nach unten. Anders ausgedrückt könnten die einzelnen Bereiche des großen Touchscreens auch durch ein Scrollen (in vertikaler und/oder horizontaler Richtung) nacheinander dargestellt werden. Welche Bereiche des großen Touchscreens 8 auf welche Bildschirmseiten 10a, 10b usw. des kleineren Touchscreens 7 verteilt und nacheinander angezeigt werden oder werden können, hängt letztendlich davon ab, wie das Anzeigen der Bildschirmseiten softwaremäßig eingerichtet ist. Hier sind vielfältige Einstellungsmöglichkeiten vorstellbar. Im Ergebnis können die angezeigten Bereiche auf beiden Touchscreens 8 und 9 somit im Wesentlichen gleich groß dargestellt werden.

Sowohl auf dem großen Touchscreen 8 als auch auf dem kleinen Touchscreen 9 sind Umschaltelemente 17a, 17b dargestellt und anwählbar, mittels derer zwischen dem Betriebsmodus "Spritzgießmaschine" und dem Betriebsmodus "Handhabungsgerät" direkt hin und her umgeschaltet werden kann. Wird beispielsweise das mobile Bediengerät von der Bedienperson mit Blick auf den Roboter 5 im Betriebsmodus "Handhabungsgerät" benutzt, um Einstellungen an dem Roboter vorzunehmen, kann bei Bedarf mittels des Umschaltelements 17b direkt auf den Betriebsmodus "Spritzgießmaschine" umgeschaltet werden, um beispielsweise Einstellungen an der Schließeinheit 3 vorzunehmen. Im Anschluss daran kann die Bedienperson erneut und direkt in den Betriebsmodus "Handhabungsgerät" zurückwechseln. In jedem Betriebsmodus können jeweils alle zur Verfügung stehenden Einstellseiten und Bedientasten aufgerufen werden. Die Erzeugung dieser Einstellseiten und Bedientasten (Layout der Bildschirmseite) erfolgt für das stationäre Bediengerät 6 mittels der diesem Bediengerät 6 zugeordneten Steuerungskomponente 30b. Demgegenüber erfolgt die Erzeugung der Einstellseiten und Bedientasten für das mobile Bediengerät (d.h. Layout der Bildschirmseiten) mittels der diesem mobilen Bediengerät zugeordneten Steuerungskomponente 30a.. Insbesondere stehen auf dem mobilen Bediengerät alle Einstellseiten der Spritzgießmaschine und alle Maschinenbedientasten der Spritzgießmaschine zur Verfügung bzw. können von der Steuerungskomponente 30a dort erzeugt und angezeigt werden, wenn sich das mobile Bediengerät im Betriebsmodus "Spritzgießmaschine" befindet. Umgekehrt stehen auf dem stationären Bediengerät alle Einstellseiten des Linearroboters und Bedientasten des Linearroboters zur Verfügung bzw. können von der Steuerungskomponente 30b dort erzeugt und angezeigt werden, wenn sich das stationäre Bediengerät im Betriebsmodus "Handhabungsgerät" befindet. Insgesamt ergibt sich somit eine Vollintegration von Spritzgießmaschine und Handhabungsgerät.

Da die Darstellung der Bildschirmseiten auf dem stationären Bediengerät und die Darstellung der Bildschirmseiten auf dem mobilen Bediengerät unabhängig voneinander erfolgt, könnten sich die Bildschirmseiten bzw. das Layout auf diesen Bediengeräten sehr unterschiedlich sein, auch wenn sich beide in dem gleichen Betriebsmodus befinden. Zur Vereinfachung der Bedienung sollten die Bildschirmseiten jedoch weitestgehend gleich oder sehr ähnlich in ihrem Layout sein. Beispielsweise sollten die auf dem kleinen Touchscreen 9 anzuzeigenden Bereiche aus dem großen Touchscreen weitgehend gleich sein in ihrer Darstellung (Layout, Größe) mit den gleichen Bereichen, wie sie auf dem großen Touchscreen angezeigt werden. Denkbar wäre aber zum Beispiel, die Bildschirmseiten für die Einstellung und/oder Bedienung des Linearroboters auf dem mobilen Bediengerät 7 in einer ersten Farbe (z.B. blau) und auf dem stationären Bediengerät in einer zweiten Farbe (z.B. grün) darzustellen.

### Bezugszeichenliste

- 1: Maschinenbett
- 2: Spritzeinheit
- 3: Schließeinheit
- 3a: Feststehende Formaufspannplatte
- 3b: Bewegliche Formaufspannplatte
- 4a: Feststehende Formhälfte
- 4b: Bewegliche Formhälfte
- 5: Linearroboter
- 6: Stationäres Bediengerät
- 7: Mobiles Bediengerät
- 8: Touchscreen des stationären Bediengeräts (großer Touchscreen)
- 8A - 8E: Bereiche einer Bildschirmseite des Touchscreens 8
- 9: Touchscreen des mobilen Bediengeräts (kleiner Touchscreen)
- 9A - 9B: Bereiche einer Bildschirmseite des Touchscreens 9
- 10a: Bildschirmseite von Touchscreen 9 in erster Einstellung
- 10b: Bildschirmseite von Touchscreen 9 in zweiter Einstellung
- 12: Fenster mit Eingabefeldern
- 12a: Eingabefeld
- 13: Graph
- 14a, 14b: Maschinenbedientasten
- 15: Direktwahl- bzw. Umschalttaste
- 16: Return-Taste
- 17a, 17b: Umschaltelemente
- 30: Zentrale Steuerung
- 30a: Steuerungskomponente für Linearroboter
- 30b: Steuerungskomponente für Spritzgießmaschine
- 32: Erste bidirektionale Datenleitung
- 34: Zweite bidirektionale Datenleitung
- 36: Datenleitungen zur Spritzgießmaschine
- 38: Datenleitungen zum Linearroboter

## Patentansprüche

1. Vorrichtung zum Bedienen einer mit einem Handhabungsgerät (5) ausgestatteten Spritzgießmaschine, umfassend ein erstes an der Spritzgießmaschine befestigtes stationäres Bediengerät (6) und ein zweites mobiles Bediengerät (7), wobei jedes Bediengerät (6, 7) Ein- und Ausgabemittel aufweist, wobei das stationäre Bediengerät (6) sowohl zum Bedienen der Spritzgießmaschine als auch zum Bedienen des Handhabungsgeräts (5) ausgestaltet ist, wobei das mobile Bediengerät (7) sowohl zum Bedienen des Handhabungsgeräts als auch zum Bedienen der Spritzgießmaschine ausgestaltet ist, wobei wenigstens die Ausgabemittel des stationären und des mobilen Bediengeräts (6, 7) jeweils als Bildschirm ausgebildet sind, wobei der Bildschirm (9) des mobilen Bediengeräts (7) kleiner ist als der Bildschirm (8) des stationären Bediengeräts (6), und wobei vorgebbare Bereiche (8A, 8C, 8D, 8E) einer Bildschirmseite des Bildschirms (8) des stationären Bediengeräts (6) nacheinander (10a, 10b) auf dem Bildschirm (9) des mobilen Bediengeräts (7) darstellbar sind .

2. Vorrichtung nach Anspruch 1,
**dadurch gekennzeichnet, dass**
das sowohl auf dem stationären Bediengerät (6) als auch auf dem mobilen Bediengerät (7) alle für das Bedienen sowohl der Maschine als auch des Handhabungsgeräts (5) erforderlichen Bedientasten vorhanden sind oder erzeugt werden können.

3. Vorrichtung nach Anspruch 1 oder 2,
**dadurch gekennzeichnet, dass**
die Ein- und Ausgabemittel auf dem stationären Bediengerät (6) und auf dam mobilen Bediengerät (7) jeweils als berührungsempfindlicher Bildschirm (Touchscreen-Bildschirm) (8, 9) ausgestaltet sind.

4. Vorrichtung nach einem der vorstehenden Ansprüche,
**dadurch gekennzeichnet, dass**
sowohl auf dem stationären (6) als auch auf dem mobilen Bediengerät (7) alle Bildschirmseiten betreffend die Bedienung bzw. die Steuerung der Maschine und alle Bildschirmseiten betreffend die Bedienung bzw. die Steuerung des Handhabungsgeräts darstellbar sind.

5. Vorrichtung nach einem der vorstehenden Ansprüche
**dadurch gekennzeichnet, dass**
die Gestalt der Bedientasten (8D, 14a, 14b), oder sonstiger Eingabeelemente (12, 12a) für die Maschine auf dem stationären (6) und auf dem mobilen Bediengerät (7) die Gleiche ist.

6. Vorrichtung nach einem der vorstehenden Ansprüche,
**dadurch gekennzeichnet, dass**
die Gestalt der Bedientasten oder sonstiger Eingabeelemente für das Handhabungsgerät (5) auf dem stationären (6) und auf dem mobilen Bediengerät (7) die Gleiche ist.

7. Vorrichtung nach einem der vorstehenden Ansprüche,
**dadurch gekennzeichnet, dass**
das stationäre Bediengerät (6) und/oder das mobile Bediengerät (7) über Umschaltelemente (17a, 17b) verfügen, mit deren Betätigung die Darstellung auf dem Bildschirm (8, 9) verändert werden kann, wobei zwischen einer Darstellung der Anzeige- und Bedienfeldes der Maschine und einer Darstellung der Anzeige- und Bedienfeldes des Handhabungsgerät (5) gewechselt werden kann.

8. Vorrichtung nach Anspruch 7,
**dadurch gekennzeichnet, dass**
auf dem Bildschirm (9) des mobilen Bediengeräts (7) ein direkter Zugriff auf bestimmte vorgebbare Bereiche (8A, 8C, 8D, 8E) vorgesehen ist, wobei zwischen der Darstellung eines Bereichs (8A) des Bildschirms (8) des stationären Bediengeräts (6) und der Darstellung eines anderen Bereichs (8C, 8D, 8E) des Bildschirms (8) des stationären Bediengeräts (6) hin- und hergewechselt werden kann, vorzugsweise über direkte Umschalttasten (15, 16) oder per Gestik.

9. Vorrichtung nach einem der vorstehenden Ansprüche,
**dadurch gekennzeichnet, dass**
auf dem mobilen Bediengerät (7) Maschinenbedientasten (8D, 14a, 14b) und Eingabefelder (12, 12a) zum Eingeben von Parametern für den Betrieb der Maschine vorhanden oder darstellbar sind.

10. Vorrichtung nach einem der vorstehenden Ansprüche,
**dadurch gekennzeichnet, dass**
eine erste Steuerungskomponente (30a) vorgesehen ist, welche dem Handhabungsgerät zugeordnet ist und dass eine zweite Steuerungskomponente (30b) vorgesehen ist, welche der Spritzgießmaschine zugeordnet ist.

11. Vorrichtung nach Anspruch 10,
**dadurch gekennzeichnet, dass**
zur Erzeugung der Bildschirmseiten auf dem mobilen Bediengerät (7) die erste Steuerungskomponente (30b) und zur Erzeugung der Bildschirmseiten auf dem stationären Bediengerät (6) die zweite Steuerungskomponente (30b) vorgesehen ist.

12. Vorrichtung nach Anspruch 10 oder 11,
**dadurch gekennzeichnet, dass**
zur Anzeige von Daten oder graphischen Informationen betreffend das Handhabungsgerät die dem Handhabungsgerät zugeordnete Steuerungskomponente (30a) vorgesehen ist, um diese Daten oder graphischen Informationen auf den Bildschirmseiten der beiden Bediengeräte anzeigen zu können, und dass zur Anzeige von Daten oder graphischen Informationen betreffend die Spritzgießmaschine die der Spritzgießmaschine zugeordnete Steuerungskomponente (30b) vorgesehen ist, um diese Daten oder graphischen Informationen auf den Bildschirmseiten der beiden Bediengeräte anzeigen zu können.

13. Spritzgießanlage, umfassend eine Spritzgießmaschine und ein Handhabungsgerät, mit einer Vorrichtung nach einem der vorstehenden
**dadurch gekennzeichnet, dass**
das stationäre (6) und das mobile Bediengerät (7) über jeweils eine bidirektionale Datenverbindung (32, 34) mit der zentralen Steuerung (30) der Gesamtanlage verbunden sind, und dass die zentrale Steuerung (30) mit den Aktuatoren und Sensoren der Spritzgießmaschine und mit den Aktuatoren und Sensoren des Handhabungsgeräts verbunden ist.

14. Spritzgießanlage nach Anspruch 13,
**dadurch gekennzeichnet, dass**
die zentrale Steuerung (30) eine erste Steuerungskomponente (30a) aufweist, welche dem Handhabungsgerät zugeordnet ist und dass die zentrale Steuerung (30) eine zweite Steuerungskomponente (30b)aufweist, welche der Spritzgießmaschine zugeordnet ist, wobei die erste Steuerungskomponente (30a) über eine bidirektionale Datenverbindung (34) mit dem mobilen Bediengerät (7) und wobei die zweite Steuerungskomponente (30b) über eine bidirektionale Datenverbindung (32) mit dem stationären Bediengerät (6) verbunden ist.

15. Spritzgießanlage nach Anspruch 14,
**dadurch gekennzeichnet, dass**
die dem Handhabungsgerät zugeordnete Steuerungskomponente (30a) über erste Datenverbindungen (38) mit den Aktuatoren und Sensoren des Handhabungsgeräts verbunden ist und dass die der Spritzgießmaschine zugeordnete Steuerungskomponente (30b) über zweite Datenverbindungen (36) mit den Aktuatoren und Sensoren der Spritzgießmaschine verbunden ist

16. Verfahren zum Bedienen einer mit einem Handhabungsgerät (5) ausgestatteten Spritzgießmaschine, umfassend ein erstes an der Maschine befestigtes stationäres Bediengerät (6) und ein zweites mobiles Bediengerät (7), wobei jedes Bediengerät Ein- und Ausgabemittel aufweist, wobei das stationäre Bediengerät (6) sowohl zum Bedienen der Maschine als auch zum Bedienen des Handhabungsgeräts (5) ausgestaltet ist, wobei das mobile Bediengerät (7) sowohl zum Bedienen des Handhabungsgeräts als auch zum Bedienen der Maschine ausgestaltet ist und wobei wenigstens die Ausgabemittel des stationären und des mobilen Bediengeräts (6, 7) jeweils als Bildschirm ausgebildet sind, wobei der Bildschirm (9) des mobilen Bediengeräts (7) kleiner ist als der Bildschirm (8) des stationären Bediengeräts (6), und wobei vorgebbare Bereiche (8A, 8C, 8D, 8E) einer Bildschirmseite des Bildschirms (8) des stationären Bediengeräts (6) nacheinander (10a, 10b) auf dem Bildschirm (9) des mobilen Bediengeräts (7) dargestellt werden.

17. Verfahren nach Anspruch 16,
**dadurch gekennzeichnet, dass**
das Layout der Bildschirmseiten auf dem mobilen Bediengerät (7) von derjenigen Steuerungskomponente (30a) erzeugt wird, welche dem Handhabungsgerät (5) zugeordnet ist, und dass das Layout der Bildschirmseiten auf dem stationären Bediengerät (6) von derjenigen Steuerungskomponente (30b) erzeugt wird, welche der Spritzgießmaschine zugeordnet ist.

18. Verfahren nach Anspruch 16 oder 17,
**dadurch gekennzeichnet, dass**
Daten oder graphische Informationen betreffend das Handhabungsgerät von der dem Handhabungsgerät zugeordneten Steuerungskomponente (30a) bereitgestellt und an die beiden Bediengeräte (6, 7) übertragen werden, und dass Daten oder graphische Informationen betreffend die Spritzgießmaschine von der der Spritzgießmaschine zugeordneten Steuerungskomponente (30b) bereitgestellt und an die beiden Bediengeräte (6, 7) übertragen werden.

## Claims

1. A device for operating an injection moulding machine equipped with a handling device (5), comprising a first stationary operating device (6) secured to the injection moulding machine, and a second mobile operating device (7), wherein each operating device (6, 7) has input and output means, wherein the stationary operating device (6) is designed both for operating the injection moulding machine and also for operating the handling device (5), wherein the mobile operating device (7) is designed both for operating the handling device and also for operating the injection moulding machine, wherein at least the output means of the stationary and of the mobile operating device (6, 7) are constructed respectively as a screen, wherein the screen (9) of the mobile device (7) is smaller than the screen (8) of the stationary operating device (6), and wherein predefinable regions (8A, 8C, 8D, 8E) of a screen page of the screen (8) of the stationary operating device (6) are able to be shown successively (10a, 10b) on the screen (9) of the mobile operating device (7).

2. The device according to Claim 1,
**characterized in that**
all the operating keys necessary for the operation both of the machine and also of the handling device (5) are present or can be produced both on the stationary operating device (6) and also on the mobile operating device (7).

3. The device according to Claim 1 or 2,
**characterized in that**
the input and output means on the stationary operating device (6) and on the mobile operating device (7) are designed respectively as a touch-sensitive screen (touchscreen) (8, 9).

4. The device according to one of the preceding claims,
**characterized in that**
all screen pages concerning the operation or respectively the control of the machine and all screen pages concerning the operation or respectively the control of the handling device are able to be presented both on the stationary operating device (6) and also on the mobile operating device (7).

5. The device according to one of the preceding claims,
**characterized in that**
the form of the operating keys (8D, 14a, 14b), or of other input elements (12, 12a) for the machine is identical on the stationary operating device (6) and on the mobile operating device (7).

6. The device according to one of the preceding claims,
**characterized in that**
the form of the operating keys or of other input elements for the handling device (5) is identical on the stationary operating device (6) and on the mobile operating device (7).

7. The device according to one of the preceding claims,
**characterized in that**
the stationary operating device (6) and/or the mobile operating device (7) have switchover elements (17a, 17b), by the actuation of which the presentation on the screen (8, 9) can be changed, wherein a changeover can be carried out between a presentation of the display- and operating field of the machine and a presentation of the display- and operating field of the handling device (5).

8. The device according to Claim 7,
**characterized in that**
on the screen (9) of the mobile operating device (7) a direct access to particular predefinable regions (8A, 8C, 8D, 8E) is provided, wherein a changeover can be made back and forth between the presentation of a region (8A) of the screen (8) of the stationary operating device (6) and the presentation of another region (8C, 8D, 8E) of the screen (8) of the stationary operating device (6), preferably via direct switchover keys (15, 16) or by gesture.

9. The device according to one of the preceding claims,
**characterized in that**
machine operating keys (8D, 14a, 14b) and input fields (12, 12a) are present or able to be present or able to be presented on the mobile operating device (7) for the inputting of parameters for the operating of the machine.

10. The device according to one of the preceding claims,
**characterized in that**
a first control component (30a) is provided, which is associated with the handling device, and that a second control component (30b) is provided, which is associated with the injection moulding machine.

11. The device according to Claim 10,
**characterized in that**
the first control component (30b) is provided for the production of the screen pages on the mobile operating device (7), and the second control component (30b) is provided for the production of the screen pages on the stationary operating device (6).

12. The device according to Claim 10 or 11,
**characterized in that**
the control component (30a) associated with the handling device is provided for the display of data or graphic information concerning the handling device, in order to be able to display these data or graphic information on the screen pages of the two operating devices, and that the control component (30b) associated with the injection moulding machine is provided for the display of data or graphic information concerning the injection moulding machine, in order to be able to display these data or graphic information on the screen pages of the two operating devices.

13. An injection moulding installation, comprising an injection moulding machine and a handling device, with a device according to one of the preceding claims,
**characterized in that**
the stationary operating device (6) and the mobile operating device (7) are connected with the central control (30) of the entire installation via respectively a bidirectional data connection (32, 34), and that the central control (30) is connected with the actuators and sensors of the injection moulding machine and with the actuators and sensors of the handling device.

14. The injection moulding installation according to Claim 13,
**characterized in that**
the central control (30) has a first control component (30a), which is associated with the handling device, and that the central control (30) has a second control component (30b), which is associated with the injection moulding machine, wherein the first control component (30a) is connected with the mobile operating device (7) via a bidirectional data connection (34) and wherein the second control component (30b) is connected with the stationary operating device (6) via bidirectional data connection (32).

15. The injection moulding installation according to Claim 14,
**characterized in that**
the control component (30a) associated with the handling device is connected with the actuators and sensors of the handling device via first data connections (38) and that the control component (30b) associated with the injection moulding machine is connected with the actuators and sensors of the injection moulding machine via second data connections (36) .

16. A method for operating an injection moulding machine equipped with a handling device (5), comprising a first stationary operating device (6) secured to the machine, and a second mobile operating device (7), wherein each operating device has input- and output means, wherein the stationary operating device (6) is designed both for operating the machine and also for operating the handling device (5), wherein the mobile operating device (7) is designed both for operating the handling device and for operating the machine, and wherein at least the output means of the stationary and of the mobile operating device (6, 7) are constructed respectively as a screen, wherein the screen (9) of the mobile operating device (7) is smaller than the screen (8) of the stationary operating device (6), and wherein predefinable regions (8A, 8C, 8D, 8E) of a screen page of the screen (8) of the stationary operating device (6) are shown successively (10a, 10b) on the screen (9) of the mobile operating device (7).

17. The method according to Claim 16,
**characterized in that**
the layout of the screen pages on the mobile operating device (7) is produced from the control component (30a) which is associated with the handling device (5), and that the layout of the screen pages on the stationary operating device (6) is produced from the control component (30b) which is associated with the injection moulding machine.

18. The method according to Claim 16 or 17,
**characterized in that**
data or graphic information concerning the handling device are provided from the control component (30a) associated with the handling device and are transferred to the two operating devices (6, 7), and that data or graphic information concerning the injection moulding machine are provided from the control component (30b) associated with the injection moulding machine and are transferred to the two operating devices (6, 7).

## Revendications

1. Dispositif destiné à commander une machine de moulage par injection équipée d'un appareil de manipulation (5), comprenant un premier appareil de commande fixe (6) fixé à la machine de moulage par injection et un deuxième appareil de commande mobile (7), dans lequel chaque appareil de commande (6, 7) présente des moyens de saisie et de sortie, dans lequel l'appareil de commande fixe (6) est conçu tant pour commander la machine de moulage par injection que pour commander l'appareil de manipulation (5), dans lequel l'appareil de commande mobile (7) est conçu tant pour commander l'appareil de manipulation que pour commander la machine de moulage par injection, dans lequel au moins les moyens de sortie des appareils de commande fixe et mobile (6, 7) sont conçus respectivement en tant qu'écran, dans lequel l'écran (9) de l'appareil de commande mobile (7) est plus petit que l'écran (8) de l'appareil de commande fixe (6), et dans lequel des zones pouvant être prédéfinies (8A, 8C, 8D, 8E) d'une page d'écran de l'écran (8) de l'appareil de commande fixe (6) peuvent être affichées l'une après l'autre (10a, 10b) sur l'écran (9) de l'appareil de commande mobile (7).

2. Dispositif selon la revendication 1, **caractérisé en ce que**
tant sur l'appareil de commande fixe (6) que sur l'appareil de commande mobile (7), toutes les touches de commande nécessaires pour commander tant la machine que l'appareil de manipulation (5) sont présentes ou peuvent être produites.

3. Dispositif selon la revendication 1 ou 2, **caractérisé en ce que**
les moyens de saisie et de sortie sur l'appareil de commande fixe (6) et sur l'appareil de commande mobile (7) sont conçus respectivement en tant qu'écran tactile (8, 9).

4. Dispositif selon l'une des revendications précédentes, **caractérisé en ce que**
tant sur l'appareil de commande fixe (6) que sur l'appareil de commande mobile (7), toutes les pages d'écran concernant la commande respectivement le pilotage de la machine et toutes les pages d'écran concernant la commande respectivement le pilotage de l'appareil de manipulation peuvent être affichées.

5. Dispositif selon l'une des revendications précédentes, **caractérisé en ce que**
la forme des touches de commande (8D, 14a, 14b) ou d'autres éléments de saisie (12, 12a) pour la machine est la même sur l'appareil de commande fixe (6) et sur l'appareil de commande mobile (7).

6. Dispositif selon l'une des revendications précédentes, **caractérisé en ce que**
la forme des touches de commande ou d'autres éléments de saisie pour l'appareil de manipulation (5) est la même sur l'appareil de commande fixe (6) et sur l'appareil de commande mobile (7).

7. Dispositif selon l'une des revendications précédentes, **caractérisé en ce que**
l'appareil de commande fixe (6) et/ou l'appareil de commande mobile (7) disposent d'éléments de commutation (17a, 17b) par l'actionnement desquels l'affichage à l'écran (8, 9) peut être modifié, dans lequel il est possible de passer d'un affichage du panneau d'affichage et de commande de la machine à un affichage du panneau d'affichage et de commande de l'appareil de manipulation (5).

8. Dispositif selon la revendication 7, **caractérisé en ce que**
sur l'écran (9) de l'appareil de commande mobile (7), un accès direct à des zones pouvant être prédéfinies précises (8A, 8C, 8D, 8E) est prévu, dans lequel il est possible de passer de l'un à l'autre entre l'affichage d'une zone (8A) de l'écran (8) de l'appareil de commande fixe (6) et l'affichage d'une autre zone (8C, 8D, 8E) de l'écran (8) de l'appareil de commande fixe (6), de préférence par des touches de contrôle directes (15, 16) ou par des gestes.

9. Dispositif selon l'une des revendications précédentes, **caractérisé en ce que**
sur l'appareil de commande mobile (7), des touches de commande machine (8D, 14a, 14b) et des champs de saisie (12, 12a) sont présents ou peuvent être affichés pour saisir des paramètres pour le fonctionnement de la machine.

10. Dispositif selon l'une des revendications précédentes, **caractérisé en ce**
**qu'**une première composante de pilotage (30a) est prévue, laquelle est attribuée à l'appareil de manipulation et qu'une deuxième composante de pilotage (30b) est prévue, laquelle est attribuée à la machine de moulage par injection.

11. Dispositif selon la revendication 10, **caractérisé en ce que**
la première composante de pilotage (30a) est prévue pour produire les pages d'écran sur l'appareil de commande mobile (7), et la deuxième composante de pilotage (30b) est prévue pour produire les pages d'écran sur l'appareil de commande fixe (6).

12. Dispositif selon la revendication 10 ou 11, **caractérisé en ce que**
pour afficher des données ou des informations graphiques concernant l'appareil de manipulation, la composante de pilotage (30a) attribuée à l'appareil de manipulation est prévue pour pouvoir afficher ces données ou ces informations graphiques sur les pages d'écran des deux appareils de commande, et que pour afficher des données ou des informations graphiques concernant la machine de moulage par injection, la composante de pilotage (30b) attribuée à la machine de mouvement par injection est prévue pour pouvoir afficher ces données ou ces informations graphiques sur les pages d'écran des deux appareils de commande.

13. Installation de moulage par injection, comprenant une machine de moulage par injection et un appareil de manipulation, comprenant un dispositif selon l'une des revendications précédentes,
**caractérisée en ce que**
les appareils mobile (6) et fixe (7) sont reliés au pilotage central (30) de la totalité de l'installation par une liaison de données bidirectionnelle (32, 34) respective, et que le pilotage central (30) est relié aux déclencheurs et aux capteurs de la machine de moulage par injection et aux déclencheurs et aux capteurs de l'appareil de manipulation.

14. Installation de moulage par injection selon la revendication 13,
**caractérisée en ce que** le pilotage central (30) présente une première composante de pilotage (30a) qui est attribuée à l'appareil de manipulation et que le pilotage central (30) présente une deuxième composante de pilotage (30b) qui est attribuée à la machine de moulage par injection, dans lequel la première composante de pilotage (30a) est reliée à l'appareil de commande mobile (7) par le biais d'une liaison de données bidirectionnelle (34) et dans lequel la deuxième composante de pilotage (30b) est reliée à l'appareil de commande fixe (6) par le biais d'une liaison de données bidirectionnelle (32).

15. Installation de moulage par injection selon la revendication 14,
**caractérisée en ce que** la composante de pilotage (30a) attribuée à l'appareil de manipulation est reliée aux déclencheurs et aux capteurs de l'appareil de manipulation par des premières liaisons de données (38) et que la composante de pilotage (30b) attribuée à la machine de moulage par injection est reliée aux déclencheurs et aux capteurs de la machine de moulage par injection par des deuxièmes liaisons de données (36) .

16. Procédé destiné à commander une machine de moulage par injection équipée d'un appareil de manipulation (5), comprenant un premier appareil de commande fixe (6) fixé à la machine de moulage par injection et un deuxième appareil de commande mobile (7), dans lequel chaque appareil de commande présente des moyens de saisie et de sortie, dans lequel l'appareil de commande fixe (6) est conçu tant pour commander la machine de moulage par injection que pour commander l'appareil de manipulation (5), dans lequel l'appareil de commande mobile (7) est conçu tant pour commander l'appareil de manipulation que pour commander la machine et dans lequel au moins les moyens de sortie des appareils de commande fixe et mobile (6, 7) sont conçus respectivement en tant qu'écran, dans lequel l'écran (9) de l'appareil de commande mobile (7) est plus petit que l'écran (8) de l'appareil de commande fixe (6), et dans lequel des zones pouvant être prédéfinies (8A, 8C, 8D, 8E) d'une page d'écran de l'écran (8) de l'appareil de commande fixe (6) peuvent être affichées l'une après l'autre (10a, 10b) sur l'écran (9) de l'appareil de commande mobile (7).

17. Procédé selon la revendication 16,
**caractérisé en ce que**
la mise en page des pages de l'écran sur l'appareil de commande mobile (7) est produite par la composante de pilotage (30a) qui est attribuée à l'appareil de manipulation (5) et que la mise en page des pages de l'écran sur l'appareil de commande fixe (6) est produite par la composante de pilotage (30b) qui est attribuée à la machine de moulage par injection.

18. Procédé selon la revendication 16 ou 17,
**caractérisé en ce que**
des données ou des informations graphiques concernant l'appareil de manipulation sont fournies par la composante de pilotage (30a) attribuée à l'appareil de manipulation et transmises aux deux appareils de commande (6, 7) et que des données ou des informations graphiques concernant la machine de moulage par injection sont fournies par la composante de pilotage (30b) attribuée à la machine de moulage par injection et transmises aux deux appareils de commande (6, 7).
